**Europäisches Patentamt**

**European Patent Office**

**Office européen des brevets**

(11) Veröffentlichungsnummer: **0 172 335**
**A2**

# (12) EUROPÄISCHE PATENTANMELDUNG

(21) Anmeldenummer: **85107157.1**

(22) Anmeldetag: **11.06.85**

(51) Int. Cl.⁴: **C 02 F 11/00**
**C 02 F 1/34**

(30) Priorität **02.08.84 DE 3428535**

(43) Veröffentlichungstag der Anmeldung:
**26.02.86 Patentblatt 86/9**

(84) Benannte Vertragsstaaten:
**AT BE CH DE FR GB IT LI NL SE**

(71) Anmelder: **Uhde GmbH**
**Friedrich-Uhde-Strasse 15**
**D-4600 Dortmund 1(DE)**

(71) Anmelder **Siekmann, Helmut E. Prof. Dr.-Ing.**
**Hermannstrasse 3A**
**D-1000 Berlin 37(DE)**

(72) Erfinder: **Siekmann, Helmut E. Prof. Dr.-Ing.**
**Hermannstrasse 3A**
**D-1000 Berlin 37(DE)**

(72) Erfinder: **Bässler, Jürgen, Dipl.-Ing.**
**Stuchteystrasse 18**
**D-4600 Dortmund 30(DE)**

(72) Erfinder: **Liebig, Winfried, Dipl.-Ing.**
**Dullrodt 22**
**D-5860 Iserlohn 15(DE)**

(74) Vertreter: **Patentanwälte Meinke und Dabringhaus**
**Dipl.-Ing. J. Meinke Dipl.-Ing. W. Dabringhaus**
**Westenhellweg 67**
**D-4600 Dortmund 1(DE)**

(54) Verfahren und Vorrichtung, insbesondere zur Konditionierung von Abwässerschlämmen.

(57) Bei einem Verfahren und einer Vorrichtung zur Behandlung von Flüssigkeit/Feststoffgemischen, insbesondere zur Konditionierung von suspendierten Feststoffen mittels Kavitation, sollte diese Kavitationsbehandlung erleichtert und vereinfacht werden. Dies wird verfahrensgemäß dadurch gelöst, daß das zu behandelnde Stoffgemisch aus einem Hochbehälter abgeleitet, über mindestens einen Rohrkrümmer umgelenkt und dann einem Fallrohr derart zugeführt wird, daß sich vor, in und nach dem Rohrkrümmer wenigstens bereichsweise in der Strömung eine Kavitationszone ausbildet und vorrichtungsmäßig dadurch, daß sie mit einem Hochbehälter (1), einem vorzugsweise horizontalen Auslaufstutzen (2), wenigstens einem sich an den Auslaufstutzen (2) anschließenden Rohrkrümmer (3) sowie einem Fallrohr (4) und mit einem Regelventil (5) im Bereich des Fallrohrendes ausgerüstet ist.

./...

- 1 -

Die Erfindung richtet sich auf ein Verfahren und eine Vorrichtung zur Behandlung von Flüssigkeit/Feststoffgemische, insbesondere zur Konditionierung von suspendierten Feststoffen mittels Kavitation.

Der Siedepunkt von Flüssigkeiten ist stark druckabhängig. Mit abnehmendem Druck wird auch die Siedetemperatur kleiner. Bei starken Unterdrücken, wie sie bei großen Strömungsgeschwindigkeiten oder bei Absenken des Umgebungsdruckes auftreten können, kann der Druck örtlich bis auf den Siededruck sinken. Derartige Verhältnisse kommen bei hydrodynamischen Strömungsmaschinen wie Pumpen, Turbinen, Propellern, z.B. bei der Umströmung von Schaufeln häufig vor. Der beschriebene Vorgang wird Kavitation genannt. Bei ihm scheidet die Flüssigkeit Dampf und Gasblasen aus, die zur Hohlraumbildung führen. Bei wieder ansteigendem Druck ist diese Erscheidung mit heftigem Zusammenfallen der Blasen, sogenannte Stoßkondensation, verbunden (E. Truckenbrodt, "Steuerungsmechanik", Springer Verlag 1968, Seite 15 oder Dubbel "Taschenbuch für den Maschinenbau, Springer-Verlag 1983, Seite 893).

Ist diese Erscheinung wegen der Möglichkeit des Anfressens des angeströmten Materiales und wegen der durch die Kavitation hervorgerufenen erheblichen Geräusche teilweise unerwünscht, so kann dieses Phänomen vielfach auch nutzbringend eingesetzt werden, insbesondere beispielsweise auf die Abtötung von Keimen in Abwasser unterstützend wirken. Hiermit beschäftigt sich die DE-PS 24 55 633.

Bei dieser bekannten Verfahrensweise wird in Zonen mit einer zum Abtöten von Keimen ausreichenden Ozonkonzentration in das Wasser eine so große Schallenergie eingeleitet, daß Kavitation auftritt, wodurch sich eine Steigerung der keimtötenden Wirkungen des Ozons in dem Abwasser erreichen läßt. Diese bekannten Maßnahmen, Kavitation durch Schall zu erzeugen, sind apparativ sehr aufwendig. Bekannt ist es auch, Kavitation durch einen Kavitator zu erzeugen, der im wesentlichen einer Zentrifuge entspricht. Auch dieser Aufwand ist vergleichsweise groß.

Aufgabe der Erfindung ist die Schaffung einer Lösung, mit der in einfacher Weise ein Stoffgemisch einer wenigstens bereichsweisen Kavitation unterzogen werden kann, mit den sich daraus ergebenden Vorteilen.

Bei einem Verfahren der eingangs bezeichneten Art wird diese Aufgabe gemäß der Erfindung dadurch gelöst, daß das zu behandelnde Stoffgemisch aus einem Hochbehälter abgeleitet, über mindestens einen Rohrkrümmer umgelenkt und dann einem Fallrohr derart zugeführt wird, daß sich vor, in und nach dem Rohrkrümmer wenigstens bereichsweise in der Strömung eine Kavitationszone ausbildet.

Durch die Kavitationsausbildung in der Strömung fällt der Druck in diesem Bereich. Ein Teil der Flüssigkeit verdampft schlagartig. Dies gilt auch für das in Bakterien enthaltene Zellwasser. Die Zellwände werden zerstört und die Eiweißmasse wird für eine weitere Behandlung aufgeschlossen. In der folgenden Stoßkondensation kondensiert der Wasserdampf in den entstandenen Blasen schlagartig. Die Blasen fallen zusammen, wobei extrem hohe Druckstöße auftreten. Die Druckstöße führen dazu, daß die restlichen Zellwände aller biologischen Substanzen in dem zu behandelnden Stoffgemisch, insbesondere auch die Zellwände der Abwasserbakterien, zerstört werden, soweit dies nicht schon bei der Dampfblasenbildung erfolgt ist. Der Abwasserschlamm läßt sich besser entwässern.

Ausgestaltungen der Verfahrensweise ergeben sich dadurch, daß das zu behandelnde Stoffgemisch eine Mehrzahl von hintereinander und/oder parallel geschalteten Kavitationszonen unterworfen wird.

Es kann auch vorgesehen sein, daß die Umlenkung und Weiterführung des Stoffgemisches so erfolgt, daß sich die Kavitationszone im gesamten Strömungsquerschnitt ausbildet.

Mit einem Verfahren zur Konditionierung von Abwasserschlämmen sieht die Erfindung zusätzlich vor, daß sich an die Konditionierung durch Kavitation eine Erwärmung des Schlammes auf 60 - 80° C, eine Anhebung des pH-Wertes auf 8 - 12 und eine nachfolgende Absenkung 2 - 6 anschließt. Mit dieser Verfahrensweise wird ein einfaches Flocken der Eiweißmassen im Schlamm ermöglicht.

Zur Lösung der weiter oben angegebenen Aufgabe sieht die Erfindung auch eine Vorrichtung vor, die sich dadurch auszeichnet, daß sie mit einem Hochbehälter, einem im wesentlichen horizontalen Auslaufstutzen, wenigstens einem sich an den Auslaufstutzen anschließenden Rohrkrümmer sowie einem Fallrohr und mit einer Regelarmatur im Bereich des Fallrohrendes ausgerüstet ist.

Diese Vorrichtung ist vergleichsweise einfach, aber sehr wirkungsvoll. Insbesondere ist es mit ihr möglich, die Ausbildung der Kavitation durch ganz einfache konstruktive Mittel zu steuern und den jeweiligen Bedürfnissen anzupassen.

Nach der Erfindung ist auch vorgesehen, daß sich das Fallrohr in seinem Durchmesser nach einer Kavitationsstrecke erweitert. Die Erweiterung unterhalb dieses Bereiches ermöglicht dort gezielt den Druck so ansteigen zu lassen, daß die Kavitation in der gewünschten Ausbildung entsteht.

Sinnvoll kann es auch sein, wenn unterhalb des Fallrohres ein Auffangbecken sowie eine Pumpeneinrichtung zur Rückförderung der Flüssigkeit in den Hochbehälter vorgesehen sind. Dies ist insbesondere dann nützlich, wenn die zu behandelnde Flüssigkeit mehrfach einer Kavitationsbehandlung unterworfen werden soll.

Nach der Erfindung kann des weiteren vorgesehen sein, daß eine Mehrzahl von Rohrkrümmern mit anschließenden Fallstrecken hintereinander und/oder parallel vorgesehen sind. Eine solche Folge von Rohrkrümmern und Fallstrecken ermöglicht es ganze Spektren von Medien zu entnehmen oder aber ein zu behandelndes Fluidvolumen in einem sehr großen Teil den jeweiligen Kavitationsbereichen zu unterwerfen.

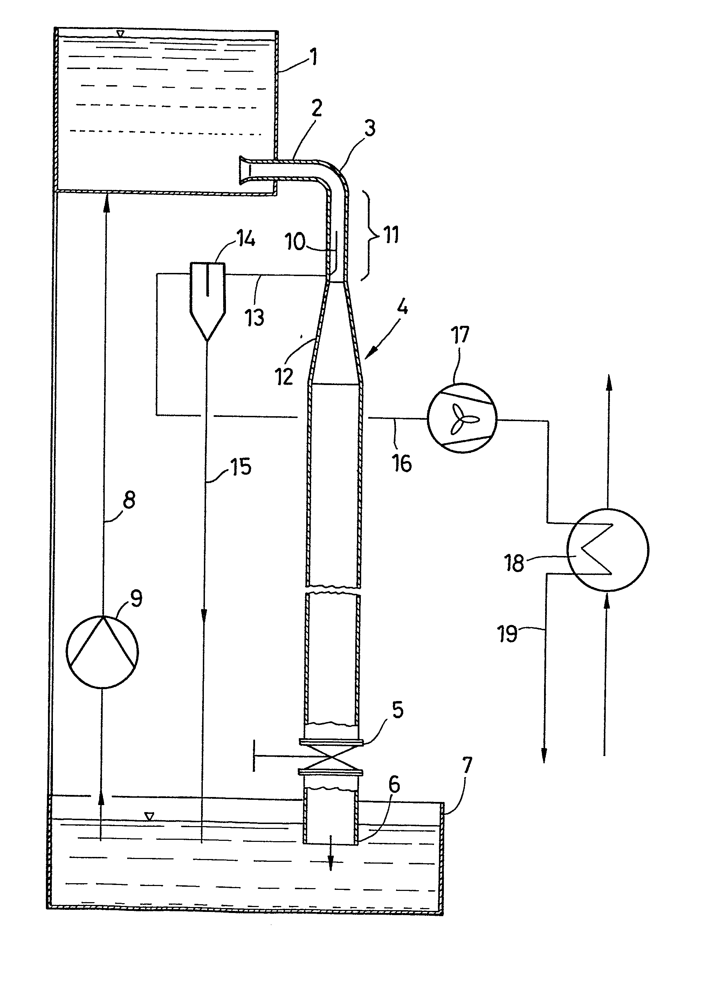

Die Erfindung ist nachstehend anhand der Zeichnung beispielsweise näher erläutert. Diese zeigt in der einzigen Figur eine Vorrichtung nach der Erfindung.

Ein Hochbehälter 1 ist im dargestellten Beispiel mit einem horizontalen Auslaufstutzen 2 ausgerüstet, der über einen Rohrkrümmer 3 in ein allgemein mit 4 bezeichnetes Fallrohr mündet.

Das Fallrohr 4 ist in Schwerkraftrichtung ausgerichtet und weist an seinem unteren Ende eine Regelarmatur 5 auf. Mit seiner Austragöffnung 6 mündet das Fallrohr 4 in ein Auffangbecken 7. Vom Auffangbecken 7 führt eine Rückführleitung 8 über eine Pumpe 9 wieder in den Hochbehälter 1.

Für die vorliegende Erfindung von untergeordneter Bedeutung sind Einrichtungen 10 unmittelbar hinter dem Rohrkrümmer 3 in einem senkrechten Rohrstück, welches mit einer Klammer 11 bezeichnet ist und die Kavitationsstrecke darstellen soll. Hinter den Einrichtungen 10, z.B. Ablenkblechen mit Absaugdüsen, erweitert sich das Fallrohr 4 trichterförmig. Dieser Bereich ist mit 12 bezeichnet.

Die Einrichtungen 10 sind, wie bereits erwähnt, mit einer Absaugleitung 13 ausgerüstet, die im dargestellten Beispiel in einem Flüssigkeitsabscheider 14 mündet. Die abgeschiedene Flüssigkeit wird über eine Leitung 15 dem Auffangbecken 7 zugeführt. Die behandelten Brüden werden im dargestellten Beispiel über eine Leitung 16, einem Brüdenverdichter 17, von dort einem Wärmetauscher bzw. Kondensator 18 zugeführt. Die Kondensatableitung ist mit 19 bezeichnet. Dieser Vorrichtungsteil einschließlich der Einrichtungen 10 kann hier entfallen.

Natürlich ist das beschriebene Ausführungsbeispiel der Erfindung noch in vielfacher Hinsicht abzuändern, ohne den Grundgedanken zu verlassen. So ist die Erfindung insbesondere nicht auf eine spezifische Querschnittsform, insbesondere des Krümmers und des Fallrohres, beschränkt.

0172335

Hier kann ein für Rohre üblicher kreisrunder Querschnitt ebenso vorgesehen sein, wie ein ovaler, ein eckiger oder ein solcher nach einem polygonen Zug. Auch die Umlenkung im Krümmer muß nicht zwingend so gestaltet sein, wie in der Abbildung wiedergegeben. Statt der 90$^\circ$ Umlenkung können Ablenkbereiche zwischen 45$^\circ$ und 135$^\circ$ vorgesehen sein. Dies kommt wiederum auf das Verfahren an, in dem die Vorrichtung eingesetzt werden soll oder auch auf die Medien die behandelt werden sollen.

0172335

Ansprüche :

1. Verfahren zur Behandlung von Flüssigkeit/Feststoffgemischen, insbesondere zur Konditionierung von suspendierten Feststoffen mittels Kavitation, dadurch gekennzeichnet, daß das zu behandelnde Stoffgemisch aus einem Hochbehälter
abgeleitet, über mindestens einen Rohrkrümmer umgelenkt
und dann einem Fallrohr derart zugeführt wird, daß sich
vor, in und nach dem Rohrkrümmer wenigstens bereichsweise
in der Strömung eine Kavitationszone ausbildet.

2. Verfahren nach Anspruch 1, dadurch gekennzeichnet, daß das zu behandelnde Stoffgemisch einer Mehrzahl von
hintereinander und/oder parallel geschalteten Kavitationszonen zugeführt wird.

3. Verfahren nach Anspruch 1 oder 2, dadurch gekennzeichnet, daß die Umlenkung und Weiterführung des Stoffgemisches so
erfolgt, daß sich die Kavitationszone im gesamten Strömungsquerschnitt ausbildet.

4. Verfahren nach einem der vorangehenden Ansprüche zur
Konditionierung von Abwasserschlämmen, dadurch gekennzeichnet, daß sich an die Konditionierung durch Kavitation eine Erwärmung des Schlammes auf 60 - 80$^{\circ}$ C, eine Anhebung des
pH-Wertes auf 8 - 12 und eine nachfolgende Absenkung auf 2
- 6 anschließt.


5.  Vorrichtung zur Durchführung des Verfahrens nach einem der
    vorangehenden Ansprüche,
    dadurch gekennzeichnet,
    daß sie aus einem Hochbehälter (1), einem vorzugsweise
    horizontalen Auslaufstutzen (2), wenigstens einem sich an
    den Auslaufstutzen (2) anschließenden Rohrkrümmer (3) sowie einem Fallrohr (4) und mit einer Regelarmatur (5) im
    Bereich des Fallrohrendes ausgerüstet ist.


6.  Vorichtung nach Anspruch 5,
    dadurch gekennzeichnet,
    daß sich das Fallrohr (4) in seinem Durchmesser nach den
    Abtrenneinbauten (10) erweitert.


7.  Vorrichtung nach Anspruch 6,
    dadurch gekennzeichnet,
    daß unterhalb des Fallrohres (4) ein Auffangbecken (7)
    sowie eine Pumpeinrichtung (9) zum Rückfördern der Flüssigkeit in den Hochbehälter (1) vorgesehen sind.


8.  Vorrichtung nach einem der vorangehenden Ansprüche,
    dadurch gekennzeichnet, daß eine Mehrzahl von Rohrkrümmern (3) mit anschließenden Fallstrecken (11) hintereinander und/oder parallel vorgesehen sind.